# EUROPEAN PATENT APPLICATION

(11) **EP 4 180 983 A1**
(43) Date of publication of application: **17.05.2023**
(21) Application number: 22200282.6
(22) Date of filing: 07.10.2022
(51) Int. Cl.: G06F 15/173, G06F 12/02, G06F 12/06, G06F 12/109, G06F 15/78, G06N 3/063

(54) **DYNAMICALLY CONFIGURABLE MULTI-MODE MEMORY ALLOCATION IN AN ACCELERATOR MULTI-CORE SYSTEM ON CHIP**

(30) Priority: 10.11.2021 US 202117523384
(71) Applicant: INTEL Corporation, Santa Clara, CA 95054 (US)
(72) Inventor: Walter, Zigi, 2627335 Haifa (IL); Rosner, Roni, 3056922 Binyamina (IL); Behar, Michael, 30900 Zichron Yaakov (IL)
(74) Representative: Goddar, Heinz J.

(57) **Abstract**

Systems, apparatuses and methods may provide for technology that determines runtime memory requirements of an artificial intelligence (AI) application, defines a remote address range for a plurality of memories based on the runtime memory requirements, wherein each memory in the plurality of memories corresponds to a processor in a plurality of processors, and defines a shared address range for the plurality of memories based on the runtime memory requirements, wherein the shared address range is aliased. In one example, the technology configures memory mapping hardware to access the remote address range in a linear sequence and access the shared address range in a hashed sequence.

## Description

### TECHNICAL FIELD

Embodiments generally relate to multi-core system on chip (SoC) architectures. More particularly, embodiments relate to dynamically configurable multi-mode memory allocation in accelerator multi-core SoCs.

### BACKGROUND OF THE DISCLOSURE

While local processing in a multi-core SoC may benefit from a private memory (e.g., that resides close to the core), data exchange with a remote core on the SoC may involve accesses to a remote memory. Conversely, some workloads include many-to-one (or one-to-many) data-access patterns, which may be best served by distributing the accesses across multiple memories, to avoid bottlenecks. A standard solution may be to implement dedicated, separate remote/shared memories, by statically assigning the memories with distinct memory ranges. As different applications require different ratios of private/remote/shared memories, statically partitioning the physical memory may result in underutilization of the data (or reduced performance, if a suboptimal type of memory is used). Specifically, in the domain of neural-network acceleration, there may be a strong variation of the different tensors used by an artificial intelligence (AI) application, which makes a static "one-size-fits-all" partition of the memories far from optimal for most workloads.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of an SoC according to an embodiment;
FIG. 2 is an illustration of an example of memory mapping configurations according to an embodiment;
FIG. 3 is a block diagram of an example of memory mapping hardware according to an embodiment;
FIG. 4 is an illustration of an example of a requested address in a multi-core SoC according to an embodiment;
FIGs. 5A and 5B are illustrations of examples of mappings between requested addresses and generated addresses according to embodiments;
FIG. 6 is a flowchart of an example of a method of allocating memory according to embodiment;
FIG. 7A is a flowchart of an example of a method of operating memory mapping hardware according to an embodiment;
FIG. 7B is a flowchart of an example of a method of accessing a shared address range in a hashed sequence according to an embodiment;
FIG. 8 is a block diagram of an example of a performance-enhanced computing system according to an embodiment;
FIG. 9 is an illustration of an example of a semiconductor package apparatus according to an embodiment;
FIG. 10 is a block diagram of an example of a processor according to an embodiment; and
FIG. 11 is a block diagram of an example of a multi-processor based computing system according to an embodiment.

### DETAILED DESCRIPTION

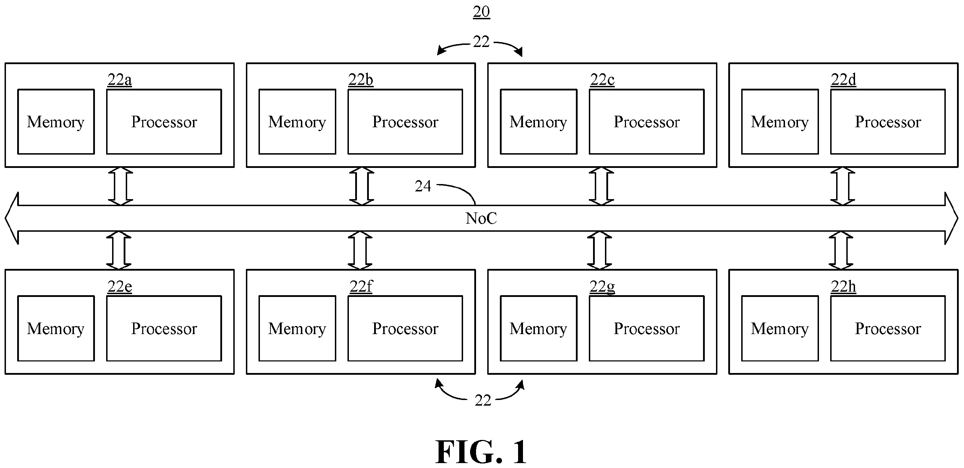

FIG. 1 shows a system on chip (SoC) 20 in which a plurality of cores 22 (22a-22h, e.g., blocks) are interconnected by a network on chip (NoC) 24. Each core 22 includes one or more processors (e.g., central processing unit/CPU, digital signal processor/DSP, customized hardware/HW engine, or other processing element), co-located with a corresponding memory. When a read/write transaction is generated by one of the cores 22, it is the role of the inter-core NoC 24 to route the transaction to the appropriate memory.

As will be discussed in greater detail, embodiments enable compile-time and runtime software (SW) to configure the HW with the following properties:
- A selected portion of each of the memories is used for local data, such that all or part of memory can be used as private memory of the core, all or part of the memory can be accessed remotely, and local accesses are invariant of the identity of the core 22 - for example, once compiled by the SW, the accesses will be identical in terms of address space when executed on each of the cores 22.
- The remaining portion of the memories is part of a globally shared pool, which is accessed in a hashed manner. This portioning is flexible in the sense that it can be modified by software reconfiguration.

The memory of the baseline SoC 20 may be organized linearly. For example, a sequence of accesses to consecutive addresses may be mapped to consecutive rows of the same memory array.

The technology described herein maintains a linear remote (e.g., unshared) memory and implements a hashed range for the shared pool without relying on a static partitioning between the linear and hashed memory arrays. This approach improves the efficiency of data placement when one-to-one data exchange patterns (e.g., consumer-producer relations) are present in the workload.

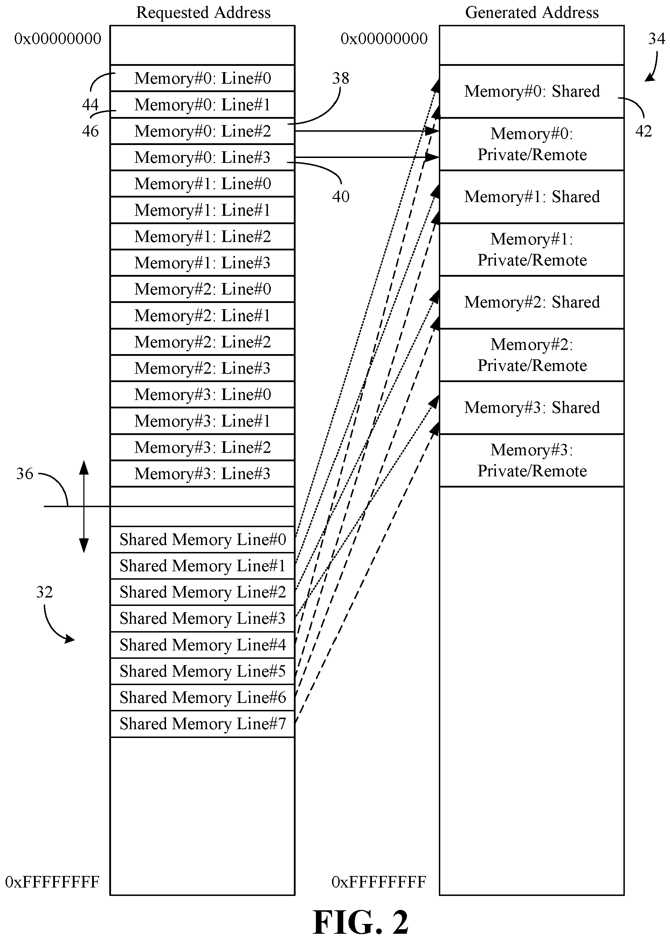

Turning now to FIG. 2, embodiments use a remote address range 30 (e.g., unshared range supporting private and remote accesses) and a separate/distinct shared address range 32 to map to the same physical memory range 34. The two ranges 30, 32 enable the memories to be accessed both in a linear sequence, as well as in a hashed sequence (e.g., as a distributed pool), according to the address used. The shared address range 32, however, is aliased - the shared address range 32 maps to the same physical arrays as the remote address range 30. In one example, software varies the placement of a logical partition 36 between the remote address range 30 and the shared address range 32 to adjust the memory capacity between the linear and hashed ranges. The software may also allocate buffers in the correct range 30, 32. Moreover, while each physical memory row now has two mappings, the software may prevent accesses to a row using an incorrect range (e.g., to avoid data corruption).

The hashing of the shared address range 32 is performed by a simple hardware block (e.g., memory mapping hardware) that manipulates the requested addresses of transactions that fall in the shared address range 32 before accessing the NoC.

### Memory Partitioning

As part of the compilation of a workload, software may partition the core memories into a "private/remote" portion (which would be linearly accessed) and a "shared" portion, that will be part of the globally shared, hashed pool. While the adjustment of the partition 36 is flexible (namely, the shared portion may be any number of rows, including - zero or all lines), the adjustment is identical for all cores. In the illustrated example, half of each memory (e.g., the first two lines) are allocated to the shared pool, while the second half (e.g., the next two lines) is left as private/remote.

### Memory Mapping

As explained above, embodiments logically separate two types of memories by a respective address range, such that the shared address range 32 has a corresponding set of addresses. Accesses to the remote address range 30 are unmodified. For example, a request for a first address 38 followed by a request for a second address 40 results in an access of the same addresses 38, 40 in the physical memory range 34 (e.g., in a linear sequence with respect to the private/remote portion of Memory#0).

Conversely, accesses to the shared address range 32 are hashed (e.g., by dedicated hardware in the originating core). Thus, linear (e.g., sequential) accesses in the shared address range 32 result in distributed transactions, spread across all memories. In the illustrated example, accesses to the first four lines of the shared address range 32 map to the first shared line in each of the four memories (short-dashed arrows). Accesses to the fifth line and beyond wraps-around, resulting in accesses to the second line of the shared portion (long-dashed arrows).

While the shared portion is also mapped in the linear space, the embodiments avoid the use of code that references those addresses to avoid data corruption. For instance, the technology described herein (e.g., implemented in a memory management unit/MMU and/or hashing unit) may prohibit reading from or writing a shared portion 42 (Lines 0-1 of Memory#0, which actually stores shared lines #0 and #4) using the private/remote addresses 44, 46.

### Hardware Hashing

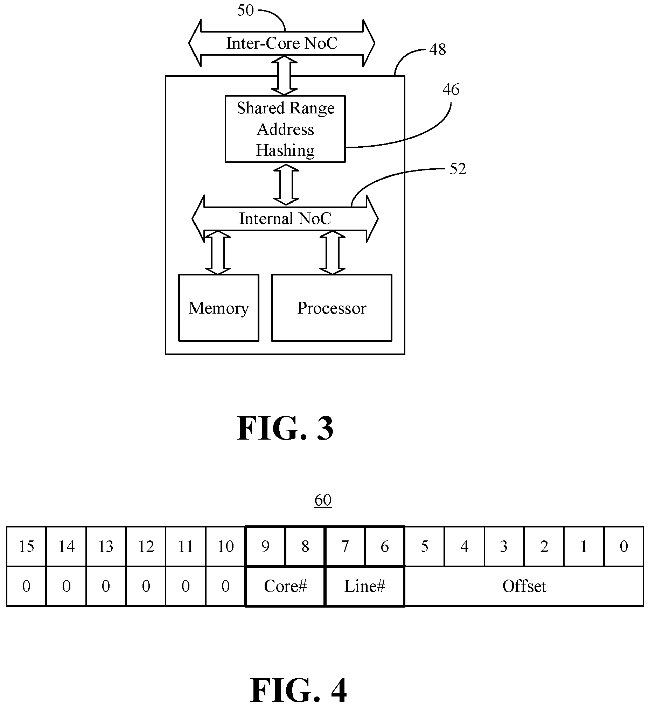

FIG. 3 demonstrates that in order to detect accesses to the shared range and compute the hashed address, a hardware block 46 (e.g., shared address range hashing hardware including configurable and/or fixed-functionality hardware) may be added to each core 48. In an embodiment, the hardware block 46 monitors the transactions between an internal NoC 52 and an inter-core NoC 50. Alternatively, the hardware block 46 can be implemented as part of an existing unit that has related functionality (e.g., MMU). The illustrated core 48 may be readily substituted for one or more of the cores 22 (FIG. 1).

Given a read/write access generated by the core 48, the hardware block 46 a) transfers the address "as-is" if the address belongs to the remote address range and b) recomputes the address of the transfer such that accesses to consecutive lines are distributed across multiple memories if the address belongs to the shared address range.

FIG. 4 shows a requested address 60 for the shared address range 32 (FIG. 2). In the illustrated example, memory lines are 64bytes (B) wide. Therefore, bits #0-5 of the requested address 60 specify the offset within the memory line. Additionally, the memory space is 2¹⁶ and the address size is 16 bits. In the SoC address map, bits #8-9 (e.g., processor selection bits) of the address select the target core, and bits #6-7 (e.g., line selection bits) select a line in the target memory.

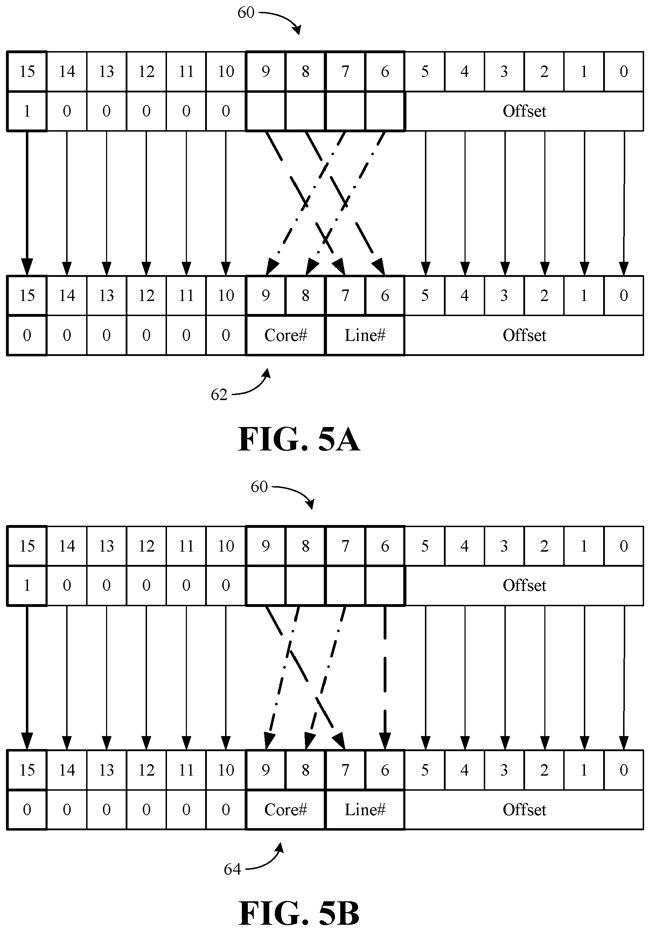

With continuing reference to FIGs. 2 and 5A, a mapping from the requested address 60 in the shared address range 32 to a generated address 62 is shown according to a first example. In this example, the shared address range 32 is mapped to the beginning of the upper half of the address map. Accordingly, the hashing unit merely examines the most significant bit (MSB, e.g., bit #15) of the requested address 60 to determine whether the requested address 60 targets the shared address range 32 (e.g., and is aliased). If the MSB is set, the memory mapping hardware manipulates the requested address 60 of the transaction to achieve the targeted access distribution.

Specifically, to implement the partitioning shown in FIG. 2, the memory mapping hardware:
Copies bits #0-5 (the offset) and bits #10-14 as-is (e.g., bypasses modifications of the copied bits);
Shifts bits #6-7 to processor selection locations such that bits #6-7 select the core number, and bit #8 selects one of the two lines allocated to the shared pool within that memory (e.g., as a result, addresses to consecutive address are distributed across different memories); and
Zeroes bit #15, such that the inter-core NoC routes the transaction to the appropriate core in a transparent manner.

Thus, each time bit #6 toggles between zero and one in the requested address 60, the next core will be selected via the processor selection location in the generated address 62. While the above description uses an extremely simplified case as an example, embodiments naturally extend to more complex systems in a straight-forward manner to account for other design choices, including different memory sizes, numbers of cores, numbers of address bits, relative portions of remote vs. shared memories, courser hashing granularity, etc. This extension may be achieved by configuring the memory mapping hardware (e.g., hashing unit) accordingly.

For example, FIG. 5B shows another mapping from the requested address 60 to a generated address 64. In the illustrated example, each time bit #7 toggles between zero and one (e.g., every other line) in the requested address 60, the next core will be selected via the processor selection location in the generated address 64. Thus, the mapping results in a hash granularity of two. More particularly, two consecutive (even, odd) lines are mapped to the same physical memory.

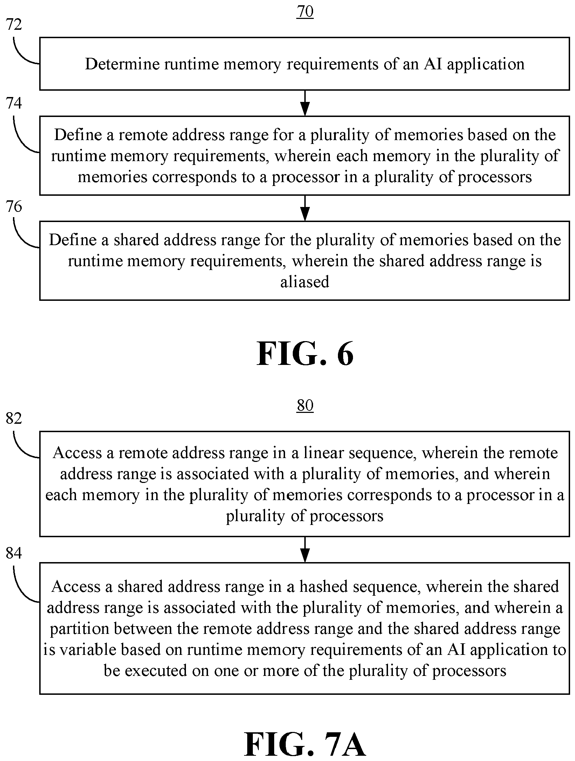

FIG. 6 shows a method 70 of allocating memory. The method 70 may be implemented as one or more modules in a set of logic instructions stored in a non-transitory machine- or computer-readable storage medium such as random access memory (RAM), read only memory (ROM), programmable ROM (PROM), firmware, flash memory, etc., in configurable hardware such as, for example, programmable logic arrays (PLAs), field programmable gate arrays (FPGAs), complex programmable logic devices (CPLDs), in fixed-functionality hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 70 can be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 72 provides for determining runtime memory requirements of an application such as, for example, an AI application (e.g., neural network application involving the use of various tensors). In an embodiment, block 72 compiles the AI application for execution on one or more of a plurality of processors. Thus, block 72 might determine whether a relatively large amount of shared address space is appropriate for the AI application. Block 74 defines a remote (e.g., unshared) address range for a plurality of memories based on the runtime memory requirements, wherein each memory in the plurality of memories corresponds to a processor in a plurality of processors. In one example, block 74 configures memory mapping hardware to access the remote address range in a linear sequence (e.g., consecutive addresses map to consecutive lines in physical memory). The remote address range may also be used for private memory accesses (e.g., by the processor corresponding to the memory).

Block 76 defines a shared address range for the plurality of memories based on the runtime memory requirements, wherein the shared address range is aliased (e.g., the shared address range is not a physical memory range). In an embodiment, block 76 configures memory mapping hardware to access the shared address range in a hashed sequence. Additionally, blocks 74 and 76 may create partitions in each of the plurality of memories. In one example, the partitions are identical across the plurality of memories. The illustrated method 70 therefore enhances performance at least to the extent that dynamically defining the remote and shared address ranges based on runtime memory requirements enables trade-offs to be made relative to private/shared/hashed portions of the memory according to the application needs and different modes of execution. The method 70 also eliminates the underutilization of data, particularly if there is a strong variation of the different tensors used by the AI application. Moreover, aliasing the shared address range into the plurality of memories further enhances performance by minimizing the area allocated for memory arrays.

FIG. 7A shows a method 80 of operating memory mapping hardware. The method 80 may generally be implemented in a hardware block such as, for example, the hardware block 46 (FIG. 3), already discussed. More particularly, the method 80 may be implemented at least partly in configurable hardware such as, for example, PLAs, FPGAs, CPLDs, in fixed-functionality hardware using circuit technology such as, for example, ASIC, CMOS or TTL technology, or any combination thereof.

Illustrated processing block 82 accesses a remote (e.g., unshared) address range in a linear sequence, wherein the remote address range is associated with a plurality of memories, and wherein each memory in the plurality of memories corresponds to a processor in a plurality of processors. Block 84 accesses a shared address range in a hashed sequence, wherein the shared address range is associated with the plurality of memories. In the illustrated example, a partition between the remote address range and the shared address range is variable based on runtime memory requirements of an AI application to be executed on one or more of the plurality of processors. In an embodiment, block 84 converts aliased addresses in the shared address range into hashed addresses that are distributed across the plurality of memories. The method 80 therefore enhances performance at least to the extent that the variable partition enables trade-offs to be made relative to private/shared/hashed portions of the memory according to the application needs and different modes of execution.

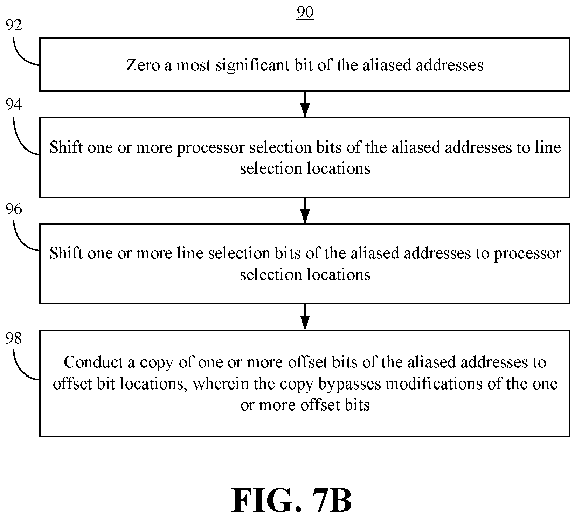

FIG. 7B shows a method 90 of accessing a shared address range in a hashed sequence. The method 90 may generally be incorporated into block 84 (FIG. 7A), already discussed. More particularly, the method 90 may be implemented at least partly in configurable hardware such as, for example, PLAs, FPGAs, CPLDs, in fixed-functionality hardware using circuit technology such as, for example, ASIC, CMOS or TTL technology, or any combination thereof.

Illustrated processing block 92 provides for zeroing a most significant bit (MSB) of aliased addresses, wherein block 94 shifts one or more processor selection bits of the aliased address bits to line selection bits. Additionally, block 96 may shift one or more line selection bits of the aliased addresses to processor selection locations. In one example, block 98 conducts a copy of one or more offset bits of the aliased addresses to offset bit locations, wherein the copy bypasses modifications of the offset bit(s) (e.g., as-is copy).

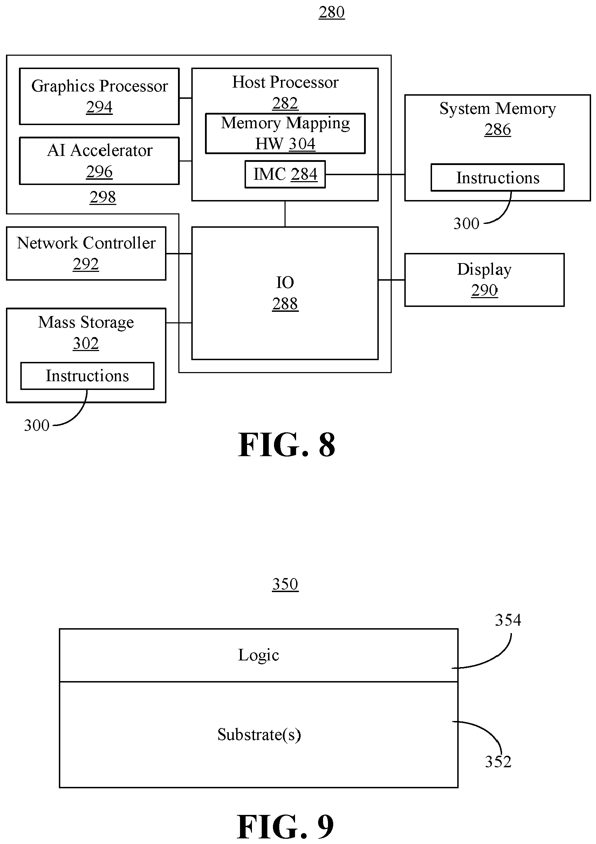

Turning now to FIG. 8, a performance-enhanced computing system 280 is shown. The system 280 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), Internet of Things (IoT) functionality, etc., or any combination thereof.

In the illustrated example, the system 280 includes a host processor 282 (e.g., CPU) having an integrated memory controller (IMC) 284 that is coupled to a system memory 286 (e.g., dual inline memory module/DIMM). In an embodiment, an IO module 288 is coupled to the host processor 282. The illustrated IO module 288 communicates with, for example, a display 290 (e.g., touch screen, liquid crystal display/LCD, light emitting diode/LED display), and a network controller 292 (e.g., wired and/or wireless). The host processor 282 may be combined with the IO module 288, a graphics processor 294, and an AI accelerator 296 into a system on chip (SoC) 298. The AI accelerator 296, the graphics processor 294, the host processor 282, and the IO module 288 may constitute a plurality of processors having a corresponding a plurality of memories (not shown).

In an embodiment, the host processor 282 executes a set of program instructions 300 retrieved from mass storage 302 and/or the system memory 286 to perform one or more aspects of the method 70 (FIG. 6). Thus, execution of the illustrated instructions 300 by the host processor 282 causes the host processor 282 to determine runtime memory requirements of an AI application, define a remote address range for the plurality of memories, and define a shared address range for the plurality of memories based on the runtime memory requirements, wherein the shared address range is aliased. The illustrated host processor 282 also includes memory mapping hardware 304. In an embodiment, the host processor 282 executes the instructions 300 to configure the memory mapping hardware 304 to access the remote address range in a linear sequence and access the shared address range in a hashed sequence.

Thus, the memory mapping hardware 304 accesses the remote address range in a linear sequence and accesses the shared address range in a hashed sequence. As already noted, the partition between the remote address range and the shared address range is variable based on runtime memory requirements of the AI application to be executed on one or more of the plurality of processors. The computing system 280 is therefore considered performance-enhanced at least to the extent that defining the remote and shared address ranges based on runtime memory requirements enables trade-offs to be made relative to private/shared/hashed portions of the memory according to the application needs and different modes of execution. The method 70 also eliminates the underutilization of data, particularly if there is a strong variation of the different tensors used by the AI application. Moreover, aliasing the shared address range into the plurality of memories further enhances performance by minimizing the area allocated for memory arrays.

FIG. 9 shows a semiconductor apparatus 350 (e.g., chip, die, package). The illustrated apparatus 350 includes one or more substrates 352 (e.g., silicon, sapphire, gallium arsenide) and logic 354 (e.g., transistor array and other integrated circuit/IC components) coupled to the substrate(s) 352. In an embodiment, the logic 354 implements one or more aspects of the method 80 (FIG. 7A) and/or the method 90 (FIG. 7B), already discussed. Thus, the logic 354 may access a remote address range in a linear sequence, wherein the remote address range is associated with a plurality of memories, and wherein each memory in the plurality of memories corresponds to a processor in a plurality of processors. Additionally, the logic 354 may access a shared address range in a hashed sequence, wherein the shared address range is associated with the plurality of memories. In an embodiment, a partition between the remote address range and the shared address range is variable based on runtime memory requirements of an AI application to be executed on one or more of the plurality of processors. The semiconductor apparatus 350 may also be incorporated into the memory mapping hardware 304 (FIG. 8). The semiconductor apparatus 350 is therefore considered performance-enhanced at least to the extent that the variable partition enables trade-offs to be made relative to private/shared/hashed portions of the memory according to the application needs and different modes of execution.

The logic 354 may be implemented at least partly in configurable or fixed-functionality hardware. In one example, the logic 354 includes transistor channel regions that are positioned (e.g., embedded) within the substrate(s) 352. Thus, the interface between the logic 354 and the substrate(s) 352 may not be an abrupt junction. The logic 354 may also be considered to include an epitaxial layer that is grown on an initial wafer of the substrate(s) 352.

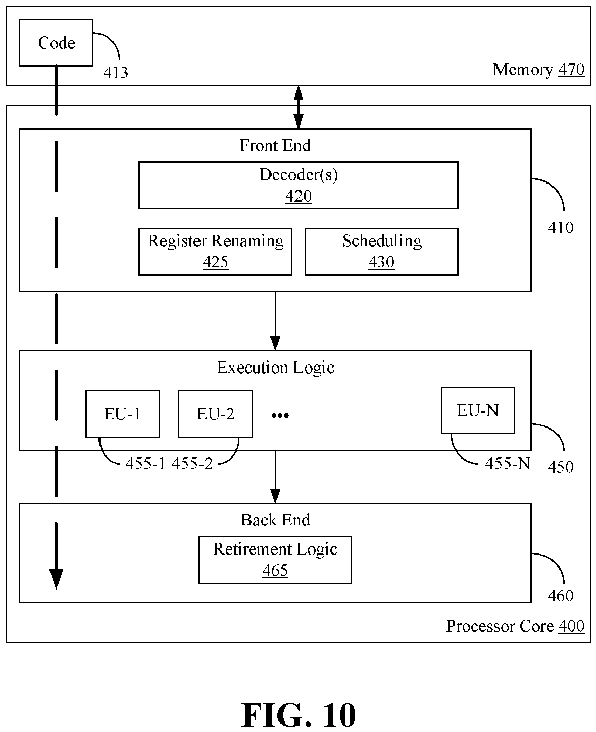

FIG. 10 illustrates a processor core 400 according to one embodiment. The processor core 400 may be the core for any type of processor, such as a micro-processor, an embedded processor, a digital signal processor (DSP), a network processor, or other device to execute code. Although only one processor core 400 is illustrated in FIG. 10, a processing element may alternatively include more than one of the processor core 400 illustrated in FIG. 10. The processor core 400 may be a single-threaded core or, for at least one embodiment, the processor core 400 may be multithreaded in that it may include more than one hardware thread context (or "logical processor") per core.

FIG. 10 also illustrates a memory 470 coupled to the processor core 400. The memory 470 may be any of a wide variety of memories (including various layers of memory hierarchy) as are known or otherwise available to those of skill in the art. The memory 470 may include one or more code 413 instruction(s) to be executed by the processor core 400, wherein the code 413 may implement the method 70 (FIG. 6), already discussed. The processor core 400 follows a program sequence of instructions indicated by the code 413. Each instruction may enter a front end portion 410 and be processed by one or more decoders 420. The decoder 420 may generate as its output a micro operation such as a fixed width micro operation in a predefined format, or may generate other instructions, microinstructions, or control signals which reflect the original code instruction. The illustrated front end portion 410 also includes register renaming logic 425 and scheduling logic 430, which generally allocate resources and queue the operation corresponding to the convert instruction for execution.

The processor core 400 is shown including execution logic 450 having a set of execution units 455-1 through 455-N. Some embodiments may include a number of execution units dedicated to specific functions or sets of functions. Other embodiments may include only one execution unit or one execution unit that can perform a particular function. The illustrated execution logic 450 performs the operations specified by code instructions.

After completion of execution of the operations specified by the code instructions, back end logic 460 retires the instructions of the code 413. In one embodiment, the processor core 400 allows out of order execution but requires in order retirement of instructions. Retirement logic 465 may take a variety of forms as known to those of skill in the art (e.g., re-order buffers or the like). In this manner, the processor core 400 is transformed during execution of the code 413, at least in terms of the output generated by the decoder, the hardware registers and tables utilized by the register renaming logic 425, and any registers (not shown) modified by the execution logic 450.

Although not illustrated in FIG. 10, a processing element may include other elements on chip with the processor core 400. For example, a processing element may include memory control logic along with the processor core 400. The processing element may include I/O control logic and/or may include I/O control logic integrated with memory control logic. The processing element may also include one or more caches.

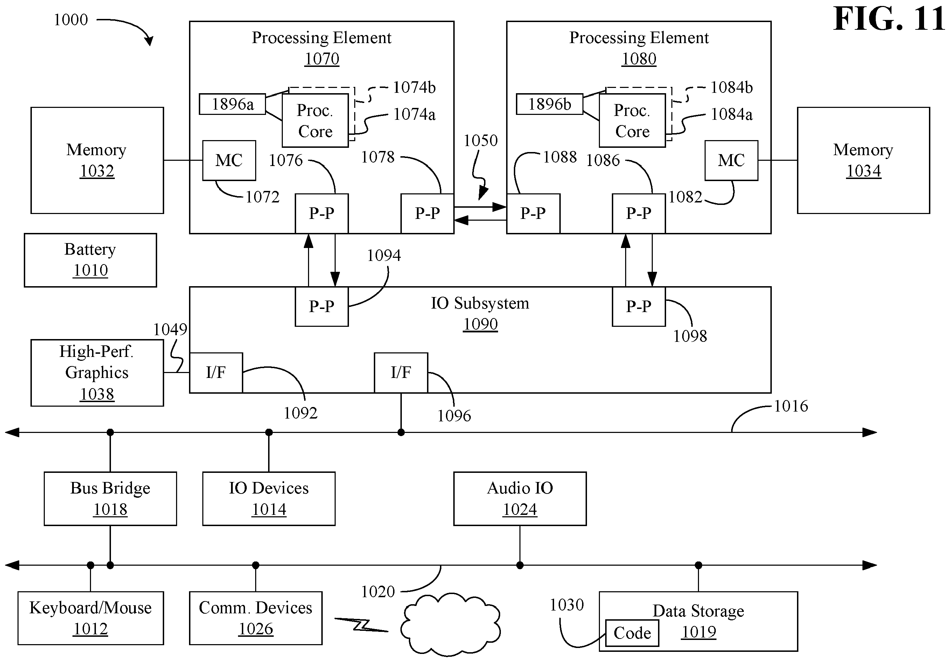

Referring now to FIG. 11, shown is a block diagram of a computing system 1000 embodiment in accordance with an embodiment. Shown in FIG. 11 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 11 may be implemented as a multi-drop bus rather than point-to-point interconnect.

As shown in FIG. 11, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 10.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 11, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 11, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 11, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement the method 70 (FIG. 6), already discussed. Further, an audio I/O 1024 may be coupled to second bus 1020 and a battery 1010 may supply power to the computing system 1000.

Note that other embodiments are contemplated. For example, instead of the point-to-point architecture of FIG. 11, a system may implement a multi-drop bus or another such communication topology. Also, the elements of FIG. 11 may alternatively be partitioned using more or fewer integrated chips than shown in FIG. 11.

### Additional Notes and Examples:

Example 1 includes a performance-enhanced system on chip (SoC) comprising a network on chip (NoC), a plurality of processors coupled to the NoC, and a plurality of memories coupled to the NoC, wherein each memory in the plurality of memories corresponds to a processor in the plurality of processors, and wherein at least one memory in the plurality of memories includes a set of instructions, which when executed by at least one processor in the plurality of processors, cause the at least one processor to determine runtime memory requirements of an artificial intelligence (AI) application, define a remote address range for the plurality of memories based on the runtime memory requirements, and define a shared address range for the plurality of memories based on the runtime memory requirements, wherein the shared address range is aliased.

Example 2 includes the SoC of Example 1, further including mapping hardware, wherein the instructions, when executed, further cause the at least one processor to configure the memory mapping hardware to access the remote address range in a linear sequence.

Example 3 includes the SoC of Example 1, further including memory mapping hardware, wherein the instructions, when executed, further cause the at least one processor to configure the memory mapping hardware to access the shared address range in a hashed sequence.

Example 4 includes the SoC of Example 1, wherein to define the remote address range and the shared address range, the instructions, when executed, further cause the at least one processor to create partitions in each of the plurality of memories.

Example 5 includes the SoC of Example 4, wherein the partitions are to be identical across the plurality of memories.

Example 6 includes the SoC of any one of Examples 1 to 5, wherein to determine the runtime memory requirements, the instructions, when executed, further cause the at least one processor to compile the AI application for execution on one or more of the plurality of processors.

Example 7 includes at least one computer readable storage medium comprising a set of instructions, which when executed by a computing system, cause the computing system to determine runtime memory requirements of an artificial intelligence (AI) application, define a remote address range for a plurality of memories based on the runtime memory requirements, wherein each memory in the plurality of memories corresponds to a processor in a plurality of processors, and, define a shared address range for the plurality of memories based on the runtime memory requirements, wherein the shared address range is aliased.

Example 8 includes the at least one computer readable storage medium of Example 7, wherein the instructions, when executed, further cause the computing system to configure memory mapping hardware to access the remote address range in a linear sequence.

Example 9 includes the at least one computer readable storage medium of Example 7, wherein the instructions, when executed, further cause the computing system to configure memory mapping hardware to access the shared address range in a hashed sequence.

Example 10 includes the at least one computer readable storage medium of Example 7, wherein to define the remote address range and the shared address range, the instructions, when executed, further cause the computing system to create partitions in each of the plurality of memories.

Example 11 includes the at least one computer readable storage medium of Example 10, wherein the partitions are to be identical across the plurality of memories.

Example 12 includes the at least one computer readable storage medium of any one of Examples 7 to 11, wherein to determine the runtime memory requirements, the instructions, when executed, further cause the computing system to compile the AI application for execution on one or more of the plurality of processors.

Example 13 includes a semiconductor apparatus comprising one or more substrates, and, logic coupled to the one or more substrates, wherein the logic is implemented at least partly in one or more of configurable or fixed-functionality hardware, the logic to access a remote address range in a linear sequence, wherein the remote address range is associated with a plurality of memories, and wherein each memory in the plurality of memories is to correspond to a processor in a plurality of processors, and access a shared address range in a hashed sequence, wherein the shared address range is associated with the plurality of memories, and wherein a partition between the remote address range and the shared address range is variable based on runtime memory requirements of an artificial intelligence (AI) application to be executed on one or more of the plurality of processors.

Example 14 includes the semiconductor apparatus of Example 13, wherein to access the shared address range in the hashed sequence, the logic is to convert aliased addresses in the shared address range into hashed addresses.

Example 15 includes the semiconductor apparatus of Example 14, wherein to convert the aliased addresses, the logic is to shift one or more line selection bits of the aliased addresses to processor selection locations, and shift one or more processor selection bits of the aliased addresses to line selection locations.

Example 16 includes the semiconductor apparatus of Example 14, wherein to convert the aliased addresses, the logic is to zero a most significant bit of the aliased addresses.

Example 17 includes the semiconductor apparatus of Example 14, wherein to convert the aliased addresses, the logic is to conduct a copy of one or more offset bits of the aliased addresses to offset bit locations, wherein the copy bypasses modifications of the one or more offset bits.

Example 18 includes the semiconductor apparatus of any one of Examples 14 to 17, wherein the hashed addresses are to be distributed across the plurality of memories.

Example 19 includes a method of operating memory mapping hardware, the method comprising accessing, by the memory mapping hardware, a remote address range in a linear sequence, wherein the remote address range is associated with a plurality of memories, and wherein each memory in the plurality of memories corresponds to a processor in a plurality of processors, and accessing, by the memory mapping hardware, a shared address range in a hashed sequence, wherein the shared address range is associated with the plurality of memories, and wherein a partition between the remote address range and the shared address is variable based on runtime memory requirements of an artificial intelligence (AI) application to be executed on one or more of the plurality of processors.

Example 20 includes the method of Example 19, wherein accessing the shared address range in the hashed sequence includes converting aliased addresses in the shared address range into hashed addresses.

Example 21 includes the method of Example 20, wherein converting the aliased addresses includes shifting one or more line selection bits of the aliased addresses to processor selection locations, and shifting one or more processor selection bits of the aliased addresses to line selection locations.

Example 22 includes the method of Example 20, wherein converting the aliased addresses includes zeroing a most significant bit of the aliased addresses.

Example 23 includes the method of Example 20, wherein converting the aliased addresses includes conducting a copy of one or more offset bits of the aliased addresses to offset bit locations, wherein the copy bypasses modifications of the one or more offset bits.

Example 24 includes the method of any one of Examples 20 to 23, wherein the hashed addresses are distributed across the plurality of memories.

Example 25 includes an apparatus comprising means for performing the method of any one of Examples 20 to 23.

Technology described herein therefore enables software to dynamically configure physical memory allocation according to workload needs. This approach improves the utilization of the available on-chip memory capacity and the flexibility of optimizing per workload data access characteristics.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. At least one computer readable storage medium comprising a set of instructions, which when executed by a computing system, cause the computing system to:
determine runtime memory requirements of an artificial intelligence (AI) application;
define a remote address range for a plurality of memories based on the runtime memory requirements, wherein each memory in the plurality of memories corresponds to a processor in a plurality of processors; and
define a shared address range for the plurality of memories based on the runtime memory requirements, wherein the shared address range is aliased.

2. The at least one computer readable storage medium of claim 1, wherein the instructions, when executed, further cause the computing system to configure memory mapping hardware to access the remote address range in a linear sequence.

3. The at least one computer readable storage medium of claim 1, wherein the instructions, when executed, further cause the computing system to configure memory mapping hardware to access the shared address range in a hashed sequence.

4. The at least one computer readable storage medium of any one of claims 1 to 3, wherein to define the remote address range and the shared address range, the instructions, when executed, further cause the computing system to create partitions in each of the plurality of memories.

5. The at least one computer readable storage medium of claim 4, wherein the partitions are to be identical across the plurality of memories.

6. The at least one computer readable storage medium of any one of claims 1 to 5, wherein to determine the runtime memory requirements, the instructions, when executed, further cause the computing system to compile the AI application for execution on one or more of the plurality of processors.

7. A semiconductor apparatus comprising:
one or more substrates; and
logic coupled to the one or more substrates, wherein the logic is implemented at least partly in one or more of configurable or fixed-functionality hardware, the logic to:
access a remote address range in a linear sequence, wherein the remote address range is associated with a plurality of memories, and wherein each memory in the plurality of memories is to correspond to a processor in a plurality of processors; and
access a shared address range in a hashed sequence, wherein the shared address range is associated with the plurality of memories, and wherein a partition between the remote address range and the shared address range is variable based on runtime memory requirements of an artificial intelligence (AI) application to be executed on one or more of the plurality of processors.

8. The semiconductor apparatus of claim 7, wherein to access the shared address range in the hashed sequence, the logic is to convert aliased addresses in the shared address range into hashed addresses.

9. The semiconductor apparatus of claim 8, wherein to convert the aliased addresses, the logic is to:
shift one or more line selection bits of the aliased addresses to processor selection locations; and
shift one or more processor selection bits of the aliased addresses to line selection locations.

10. The semiconductor apparatus of any one of claims 8 to 9, wherein to convert the aliased addresses, the logic is to zero a most significant bit of the aliased addresses.

11. The semiconductor apparatus of any one of claim 8 to 9, wherein to convert the aliased addresses, the logic is to conduct a copy of one or more offset bits of the aliased addresses to offset bit locations, wherein the copy bypasses modifications of the one or more offset bits.

12. The semiconductor apparatus of any one of claims 8 to 11, wherein the hashed addresses are to be distributed across the plurality of memories.

13. A method comprising:
accessing, by memory mapping hardware, a remote address range in a linear sequence, wherein the remote address range is associated with a plurality of memories, and wherein each memory in the plurality of memories corresponds to a processor in a plurality of processors; and
accessing, by the memory mapping hardware, a shared address range in a hashed sequence, wherein the shared address range is associated with the plurality of memories, and wherein a partition between the remote address range and the shared address is variable based on runtime memory requirements of an artificial intelligence (AI) application to be executed on one or more of the plurality of processors.

14. The method of claim 13, wherein accessing the shared address range in the hashed sequence includes converting aliased addresses in the shared address range into hashed addresses.

15. An apparatus comprising:
means for accessing, by memory mapping hardware, a remote address range in a linear sequence, wherein the remote address range is associated with a plurality of memories, and wherein each memory in the plurality of memories corresponds to a processor in a plurality of processors; and
means for accessing, by the memory mapping hardware, a shared address range in a hashed sequence, wherein the shared address range is associated with the plurality of memories, and wherein a partition between the remote address range and the shared address is variable based on runtime memory requirements of an artificial intelligence (AI) application to be executed on one or more of the plurality of processors.
